# EUROPÄISCHE PATENTSCHRIFT

(11) **EP 1 625 390 B1**
(45) Veröffentlichungstag und Bekanntmachung des Hinweises auf die Patenterteilung: **27.10.2010**
(21) Anmeldenummer: 04730968.7
(22) Anmeldetag: 04.05.2004
(51) Int. Cl.: G01N 27/416, G01N 27/28

(54) **ADAPTER ZUM ANSCHLUSS EINES SENSORMODULS AN EIN UMFORMERMODUL**
ADAPTER FOR CONNECTING A SENSOR MODULE TO A TRANSDUCER MODULE
ADAPTATEUR SERVANT A RACCORDER UN MODULE DETECTEUR A UN MODULE TRANSDUCTEUR

(30) Priorität: 16.05.2003 DE 10322276
(43) Veröffentlichungstag der Anmeldung: 15.02.2006
(73) Patentinhaber: Endress + Hauser Conducta Gesellschaft für Mess- und Regeltechnik mbH + Co.KG., 70839 Gerlingen (DE)
(72) Erfinder: WITTMER, Detlev, 75433 Maulbronn (DE); PECHSTEIN, Torsten, 01445 Radebeul (DE)
(74) Vertreter: Andres, Angelika Maria
(86) Internationale Anmeldenummer: PCT/EP2004/004697
(87) Internationale Veröffentlichungsnummer: WO 2004/102177

(56) Entgegenhaltungen:
- DE-A- 10 055 090
- DE-A- 10 218 606
- GB-A- 2 323 172
- US-A- 4 926 380
- US-A- 5 804 971
- US-A- 5 821 405
- US-A1- 2001 023 386
- PATENT ABSTRACTS OF JAPAN vol. 2003, no. 11, 5. November 2003 (2003-11-05) & JP 2003 210438 A (TYCO HEALTHCARE JAPAN INC;TSE:KK), 29. Juli 2003 (2003-07-29)
- PATENT ABSTRACTS OF JAPAN vol. 011, no. 042 (P-545), 6. Februar 1987 (1987-02-06) & JP 61 210958 A (HITACHI LTD), 19. September 1986 (1986-09-19)

## Beschreibung

Die vorliegende Erfindung betrifft Adapter für modulare Messumformer, welche ein Sensormodul und ein Umformermodul aufweisen. Derartige Sensormodule können beispielsweise Sensoren zur Messung der folgenden Größen umfassen: Druck, Temperatur, Füllstand, pH-Wert, Redoxpotential, Temperatur, Feuchte, Gaskonzentrationen, Sauerstoffgehalt, Trübung, Masse, Dichte und der gleichen mehr. Zudem können die Sensoren spektrometrische Sensoren, chomatographische Sensoren, Kraftsensoren, Beschleunigungssensoren und Kombinationssensoren umfassen, die beliebige Kombinationen der zuvor genannten Messgrößen in Kombination erfassen können. Aus US 5,804,971 ist ein kartenförmiger Adapter bekannt, der eine elektrochemische Messzelle und einen Computer verbindet. Die genannten Sensormodule sind gewöhnlich mit keiner oder mit minimaler Elektronik ausgestattet, die lediglich eine Vorprozessierung der vom Sensor ausgegebenen Primärsignale ermöglicht. Die vorprozessierten Signale oder die Rohsignale werden gewöhnlich über eine Schnittstelle an einen Umformer ausgegeben, welcher dieser weiter verarbeitetet und gegebenfalls nach einem der gängigen Kommunikationsprotokolle wie 4.....20mA, HART, Profibus, Foundation Fieldbus, u.a. kommuniziert.

Die fortschreitende Entwicklung im Bereich der Prozess- und Labormesstechnik hat dazu geführt, dass verschiedene Entwicklungsstufen von Sensormodulen und Umformermodulen nicht mehr miteinander kommunizieren können, bzw. dazu, dass das Potential neuer Module in Zusammenarbeit mit Modulen alter Technologie nicht voll ausgeschöpft werden kann. Insofern als die installierte Basis von Geräten mit alter Technologie sehr umfangreich ist, erweist sich die fehlende Kompatibilität als Innovationshemmnis, da die Anschaffung neuer Umformermodule zugleich die Anschaffung neuer Sensormodule erforderlich macht. Diese soll kurz am Beispiel der potentiometrischen Umformer erläutert werden, die in der noch unveröffentlichten Deutschen Patentanmeldung 102 18 606.5 offenbart sind.

Die dort beschriebenen Umformer umfassen ein Sensormodul, welches neben einem potentiometrischen Elementarsensor zur Erfassung einer potentiometrischen Größe ein Speichermodul und gegebenfalls ein Mikroprozessor umfasst.

Das Speichermodul speichert Sensorkenndaten, wie Kalibrationsdaten, pH-Einsatzbereich, Temperatureinsatzbereich, Historiendaten usw. Auf diese Weise können vorkalibrierte potentiometrische Sensoren an einen passenden Umformer angeschlossen werden, ohne das eine Kalibration am Umformer erforderlich wäre, oder ohne das die Kalibrationsdaten von Hand in den Umformer eingegeben werden müssen.

Der optional vorgesehene Mikroprozessor steuert die Kommunikation zwischen dem Umformer und dem potentiometrischen Sensor und gegebenfalls das Lesen und Schreiben der Daten im Speicherelement des Sensormoduls.

In einer vorteilhaften Ausgestaltung weisen das Sensormodul und der dazu passende Umformer eine galvanisch getrennte Schnittstelle, insbesondere eine induktive Schnittstelle auf, die induktive Schnittstelle des Umformers ist dabei meistens nicht unmittelbar am Umformergehäuse angeordnet, sondern sie wird über ein Kabel zum Sensormodul geführt, um das störanfällige potentiometrische Signal des Sensors in unmittelbarer Nähe des Sensors in ein robusteres Digitalsignal zu wandeln, welches dann über das Kabel zum Umformer übertragen wird.

Konventionelle potentiometrische Sensoren, wie pH-Elektroden können naturgemäß mit der induktiv gekoppelten Schnittstelle nicht kommunizieren. Selbst wenn der Umformer eine galvanische Schnittstelle aufweist, ist das Potential eines modernen Umformermoduls mit einem älteren potentiometrischen Sensormodul nicht auszuschöpfen, weil dem Umformermodul die Kalibrationsdaten fehlen, die von dem Sensormodul bereitzustellen sind.

Sinngemäß kann ein modernes Sensormodul wenig mit einem konventionellen Umformermodul anfangen, da die Schnittstellen möglicherweise nicht zueinander passen und zu dem die speicherverfügbare Information nicht abgerufen wird.

Es ist die Aufgabe der vorliegenden Erfindung hier Abhilfe zu schaffen.

Die Aufgabe wird erfindungsgemäß gelöst durch das Adapter gemäß des unabhängigen Patentanspruchs 1. Das erfindungsgemäße Adapter zum Anschluß eines Sensormoduls an ein Umformermodul, wobei das Sensormodul eine Sensorschnittstelle mit einem Sensorkupplungselement und das Umformermodul eine Umformerschnittstelle mit einem Umformerkupplungselement aufweist, wobei die Sensorschnittstelle mit der Umformerschnittstelle inkompatibel ist, umfaßt eine sensorseitige Adapterschnittstelle mit einer sensorseitigen Adapterkupplung zum Anschluß an die Sensorkupplung und eine umformerseitige Schnittstelle mit einem umformerseitigen Adapterkupplungselement zum Anschluß an das Umformerkupplungselement, und eine Schaltungsanordnung zur Konvertierung der Signale vom Format der Umformerschnittstelle zum Format der Adapterschnittstelle und umgekehrt.

Der Begriff Umformerschnittstelle ist hier weit zu verstehen. Demnach kann die Umformerschnittstelle direkt an einem Gehäuse des Umformers angeordnet sein, oder sie kann über ein Kabel zum Sensor geführt werden.

Eine der Schnittstellen des Adapters kann eine kontaktlose Schnittstelle, insbesondere eine induktive Schnittstelle sein. Hierbei kann es sich beispielsweise um eine induktive Schnittstelle handeln, wie sie in der deutschen Patentanmeldung DE 100 55 090.8 der gleichen Anmelderin beschrieben ist. Beispielsweise kann die umformerseitige Adapterschnittstelle als eine derartige Induktive Schnittstelle ausgestaltet sein. In diesem Fall kann die sensorseitige Adapterschnittstelle beispielsweise galvanische Kontakte zum Anschluß an eine konventionellen Sensor, beispielsweise einen konventionellen potentiometrischen Sensor bzw. pH. Sensor umfassen.

Die Schaltungsanordnung des Adapters umfaßt in diesem Fall zumindest einen A/D, Wandler zur Wandlung der Analogsignale des konventionellen Sensors in Digitalsignale. Zudem umfaßt die Schaltungsanordnung einen Modulator um ein AC-Signal, welches zur Speisung des Adapters, von der Umformschnittstelle in die Umformerseitige Adapterschnittstelle eingekoppelt wird durch Lastmodulation zu modulieren. Als Modulationsverfahren eignet sich insbesondere ASK (Amplitude Shift Keying). Optional kann das Adapter einen Speicher zur Speicherung von Sensordaten, wie Kalibrationsdaten, Historiendaten, Schleppzeigerdaten u.ä. aufweisen. Die Speicherung beispielsweise der Kalibrationsdaten im Speichermodul des Adapters ermöglicht den Einbau eines vorkalibrierten konventionellen Sensors, wobei der Umformer die Kalibrationsdaten aus dem Speichermodul des Adapters auslesen kann.

Umgekehrt kann die galvanisch getrennte Schnittstelle die sensorseitige Adapterschnittstelle zum Anschluß an einen entsprechenden Sensor mit induktiver Schnittstelle sein, wie er beispielsweise in der deutschen Patentanmeldung DE 102 18 606.5 offenbart ist. Wenn in diesem Fall die Umformerschnittstelle galvanische Kontakte aufweist und analoge DC-Signale erwartet und bereitstellt, so umfaßt die Schaltungsanordnung einen AC-Generator, welcher die induktive Speisung des Sensors ermöglicht, und einen D/A-Wandler zur Wandlung der vom Sensor durch Lastmodulation des AC-Signals empfangenen digitalen Daten. Die Energieversorgung des Adapters erfolgt vorzugsweise durch die Hilfsenergieversorgung des Umformers, oder durch eine autonome Energieversorgung, beispielsweise in Form einer Batterie.

Zu der eben beschriebenen Ausgestaltung gibt es noch die folgende Variante, die erhebliche wirtschaftliche Relevanz hat. So kann zwar die Bereitschaft bestehen, neue Umformer und Sensoren einzusetzen, aber man möchte auf die installierten Verkabelungen zurückgreifen. In diesem Fall führt der Umformer ein digitales Signal, beispielsweise ein RS485 Signal in einem alten Kabel an eine galvanische Umformerschnittstelle. Das weist in diesem Fall eine umformerseitge Adapterschnittstelle mit galvansichen Kontakten auf. Die sensorseitige Adapterschnittstelle ist in diesem Fall eine induktiv koppelnde Schnittstelle. Die Schaltungsanordnung umfaßt einen AC-Generator zur Speisung des Sensors und einen Modulator zur Modulation des AC-Signals mit den vom Umformer empfanenen Digitalsignalen, sowe einen Demodulator zum Empfang der vom Sensor durch Lastmodulation gesendeten Signale. Ein A/D oder D/A wandller ist in diesem Falle nicht erforderlich.

Schließlich kann eine Schnittstelle des Adapters als Schnittstelle zur drahtlosen Kommunikation mit einer komplementären Schnittstelle gestaltet sein.

## Patentansprüche

1. Adapter zum Anschluß eines Sensormoduls zum Messen eines pH-Wertes an ein Umformermodul, umfassend:
eine sensorseitige Adapterschnittstelle mit einer sensorseitigen Adapterkupplung zum Anschluß an eine Sensorschnittstelle mit einem Sensorkupplungselement
eine umformerseitige Schnittstelle mit einem umformerseitigen Adapterlcupplungselement zum Anschluß an ein Umformerschnittstelle mit einem Umformerkupplungselement, und
eine Schaltungsanordnung zur Konvertierung der Signale vom Format der Umformerschnittstelle zum Format der Adapterschnittstelle und/oder umgekehrt,
wobei die umformerseitige Adapterschnittstelle als induktive Schnittstelle ausgestaltet ist, und die sensorseitige Adapterschnittstelle galvanische Kontakte aufweist,
wobei die Schaltungsanordnung zumindest einen A/D, Wandler zur Wandung von Analogsignalen des Sensors umfaßt, und einen Modulator, um ein AC-Signal, welches zur Speisung des Adapters, von der Umformschnittstelle in die umformerseitige Adapterschnittstelle eingekoppelt wird, durch Lastmodulation zu modulieren,
wobei der Adapter einen Speicher zur Speicherung von Sensordaten, nämlich Kalibrierdaten und Historiendaten aufweist.

## Claims

1. Adapter for connecting a sensor module, used to measure a pH value, to a transmitter module comprising:
an adapter interface on the sensor side with an adapter coupling on the sensor side for connection to a sensor interface with a sensor coupling element
an interface on the transmitter side with an adapter coupling element on the transmitter side for connection to a transmitter interface with a transmitter coupling element and
a circuit arrangement for converting the signals from the format of the transmitter interface to the format of the adapter interface and/or vice versa.
**Characterized in that** the adapter interface on the transmitter side is designed as an inductive interface and the adapter interface on the sensor side has galvanic contacts.
**Characterized in that** the circuit arrangement comprises at least one A/D converter for converting analog signals of the sensor, and a modulator which uses load modulation to modulate an AC signal which, in order to supply signals to the adapter, is coupled from the transmitter interface into the adapter interface on the transmitter side.
**Characterized in that** the adapter has a memory unit for storing sensor data, namely calibration data and history data.

## Revendications

1. Adaptateur destiné au raccordement d'un module capteur destiné à la mesure d'un pH sur un module transmetteur, comprenant :
une interface adaptateur côté capteur avec un élément de couplage d'adaptateur côté capteur pour le raccordement à une interface capteur avec un élément de couplage de capteur
une interface côté transmetteur avec un élément de couplage d'adaptateur côté transmetteur pour le raccordement à une interface transmetteur avec un élément de couplage de transmetteur, et
un circuit de commutation destiné à la conversion des signaux du format de l'interface transmetteur vers le format de l'interface adaptateur et/ou vice versa,
l'interface adaptateur côté transmetteur étant conçue sous la forme d'une interface inductive et l'interface adaptateur côté capteur présentant des contacts galvaniques,
le circuit de commutation présentant au moins un convertisseur A/N destiné à la conversion de signaux analogiques du capteur, et un modulateur destiné à moduler par modulation de charge un signal c.a., lequel est injecté en vue de l'alimentation de l'adaptateur depuis l'interface transmetteur dans l'interface adaptateur côté transmetteur,
l'adaptateur présentant une mémoire destinée à la mémorisation de données capteur, notamment de données d'étalonnage et de données historiques.
